# EUROPEAN PATENT APPLICATION

(11) **EP 4 327 703 A1**
(43) Date of publication of application: **28.02.2024**
(21) Application number: 22791965.1
(22) Date of filing: 15.04.2022
(51) Int. Cl.: A47J 19/06, A47J 19/02, A47J 43/07

(54) **SEPARABLE SCREW AND JUICER USING SAME**

(30) Priority: 23.04.2021 KR 20210001281 U
(71) Applicant: Hurom Co., Ltd., Gimhae-si, Gyeongsangnam-do 50969 (KR)
(72) Inventor: AN, Sang Min, Gimhae-si, Gyeongsangnam-do 51004 (KR)
(74) Representative: Wallinger Ricker Schlotter Tostmann
(86) International application number: PCT/KR2022/005477
(87) International publication number: WO 2022/225265

(57) **Abstract**

A separable screw according to an embodiment of the present disclosure includes a first module having a plurality of slits formed on an outer peripheral surface thereof by a plurality of rods, and a second module formed with a plurality of ribs inserted into the slits of the first module, in which the first module and the second module are detachably coupled, and when the second module is inserted into and coupled to the first module, the rib is inserted into the slit to form a gap between the rib and the slit, at least one first spiral protrusion is formed on an outer peripheral surface of the rod, and a groove retreated toward a central axis of the first module is formed on the first spiral protrusion located at an upper portion of the first module.

## Description

### [Technical Field]

The present disclosure relates to a separable screw and a juicer using the same, and more particularly, to a separable screw that smooths juicing by forming a groove on a thread of a screw used in the juicer, and a juicer using the same.

### [Background Art]

Recently, as interest in health has increased at home, the frequency of use of juicers having a function of enabling individuals to directly produce juice from juicing targets such as vegetables, grains, and fruits and intake the juice is increasing.

As disclosed in Korean Patent No. 0793852, the general operating form of such a juicer is a method of gently pressing and squeezing injected juicing materials to obtain the juice by using, for example, a principle of grinding beans with a millstone and squeezing out the juice.

To this end, the juicer includes a driver that provides torque, a drum housing that includes a driving shaft receiving the torque from the driver, a screw that is connected to the driving shaft and compresses and pulverizes a juicing target by a screw spiral formed in a portion of the driving shaft, and a juicing drum that separates juice produced by the screw. The driver that provides the torque to the juicer includes a motor and a reducer. The motor is connected to the driving shaft to transmit the torque to the screw. To this end, the driving shaft penetrates through a lower portion of the drum housing and is connected to the screw.

Generally, the juicing drum has a mesh structure formed of mesh pores. In the case of the juicing drum having the mesh structure, there is the disadvantage of being easily clogged by residue from the juicing target during the juicing. In addition, since the mesh pores are formed tightly, there is a problem that it is difficult to clean the residue from the juicing target stuck in the mesh pores. In addition, various filter structures may be assumed, but has difficulty in applying to a juicer using a screw compression method, such as performing a simple filtration function.

In addition, fine circular mesh pores were formed on a side surface of the conventional mesh drum to discharge the juicing generated inside the mesh pore to the outside. However, if the residue stuck in the mesh pores is not thoroughly cleaned, the residue may rot and bacteria may proliferate. In the conventional mesh drum structure, there is a problem in that it is difficult to clean the residue stuck in the mesh pores.

In addition, the thread of the conventional screw is configured to maintain a uniform gap with an inner side surface of the mesh drum. In this case, the juice material pulverized by the screw is transported downward without restriction, causing a problem with noise and clogging of residue.

### [Disclosure]

### [Technical Problem]

The present disclosure attempts to provide a separable screw capable of performing a function of allowing the screw to serve as a conventional mesh drum and to be easily cleaned by composing the screw into two modules, and preventing noise during juicing and preventing a clogging phenomenon of a pulverized juicing material to smooth juicing by forming a groove on an uppermost spiral protrusion of the screw, and a juicer using the same.

### [Technical Solution]

According to an embodiment of the present disclosure, a separable screw includes a first module having a plurality of slits formed on an outer peripheral surface thereof by a plurality of rods, and a second module formed with a plurality of ribs inserted into the slits of the first module, in which the first module and the second module are detachably coupled, and when the second module is inserted into and coupled to the first module, the rib is inserted into the slit to form a gap between the rib and the slit, at least one first spiral protrusion is formed on an outer peripheral surface of the rod, and a groove retreated toward a central axis of the first module is formed on the first spiral protrusion located at an upper portion of the first module.

The groove may be retreated from an outer side surface of the first spiral protrusion by more than 1/2 of a radius of the first spiral protrusion.

The groove may be formed in an angle range of 30° to 90° in a radial direction of the first spiral protrusion.

At least one second spiral protrusion may be formed in at least one of the plurality of ribs, and when the second module is inserted into and coupled to the first module, the first spiral protrusion of the rod and the second spiral protrusion of the rib may form a continuous screw spiral.

A lower portion of the second module may be open and an upper portion thereof may be closed.

A screw shaft may be formed in an inner center of the first module, and a shaft through hole of a shape corresponding to the screw shaft may be formed on an upper surface of the second module so that the screw shaft is inserted.

The screw shaft may be formed in a polygonal shape.

A key protrusion may be formed on an inner upper surface of the first module, and a key groove into which the key protrusion is inserted may be formed on an outer upper surface of the second module.

A width of the rod may be narrower toward a radial inside of the first module.

A clearance may be formed between an inner peripheral surface of the first module and an outer peripheral surface of the second module.

An inclined part may be formed on the rod of the first module by cutting off an edge adjacent to the slit.

According to another embodiment of the present disclosure, a juicier includes the separable screw of any one of the embodiments, a drum housing having the separable screw accommodated therein, at least one rib jaw formed on an inner peripheral surface thereof in a longitudinal direction, a drum hole formed on a bottom surface thereof, and a juice outlet through which juice is discharged and a residue outlet through which residue is discharged and spaced apart from each other, and a main body part including a driving shaft that is inserted into the drum hole and transmits power to the separable screw.

The juice extracted between the separable screw and the drum housing may move to an inside of the separable screw through a gap formed between the rib and the slit and may be discharged through the juice outlet.

The residue remaining after the juice is extracted between the separable screw and the drum housing may move downward between the separable screw and the drum housing and may be discharged through the residue outlet.

### [Advantageous Effects]

According to an embodiment of the present disclosure, by configuring the separable screw so that two modules may be coupled, two modules are easily assembled and disassembled, making it easy to manufacture and clean a juicing drum.

In addition, according to an embodiment of the present disclosure, it is possible to smoothly pulverize, transfer, and compress a juicing material by a screw during compression, increase a juicing rate through fine pulverization and compression of the juicing material, and smooth an injection of the juicing material.

In addition, according to an embodiment of the present disclosure, by preventing residue from being stuck through a first rib jaw and an inclined part during juicing, it is possible to prevent the problem of residue that interrupts a flow of squeezed juice, thereby improving the juicing efficiency.

In addition, by forming a groove on an uppermost spiral protrusion of a screw, it is possible to help cut and pulverize the juicing material, facilitate downward transport, prevent noise during juicing, and prevent clogging of the pulverized juicing material to smooth the juicing.

### [Description of the Drawings]

FIGS. 1 and 2 are perspective views of a juicer according to various embodiments of the present disclosure.
FIGS. 3 and 4 are exploded perspective views of a drum housing of the juicer according to the embodiment of the present disclosure.
FIGS. 5 and 6 are exploded perspective views of a separable screw according to an embodiment of the present disclosure.

### [Mode for Invention]

An exemplary embodiment will hereinafter be described in detail with reference to the accompanying drawings.

Throughout the specification, unless explicitly described to the contrary, the word "comprise" and variations such as "comprises" or "comprising", will be understood to imply the inclusion of stated elements but not the exclusion of any other elements. For convenience of description, a direction closer to a ground (lower side in the drawings) is referred to as 'lower side,' 'lower surface,' 'lower end,' and similar names, and a direction (upper side in the drawings) away from the ground is referred to as 'upper side,' 'upper surface,' 'upper end', and similar names. Throughout the present specification, portions denoted by the same reference numerals mean the same or similar components. In addition, in the attached drawings, content that goes beyond the gist of the present disclosure is briefly depicted or omitted, and its description is also briefly described or omitted.

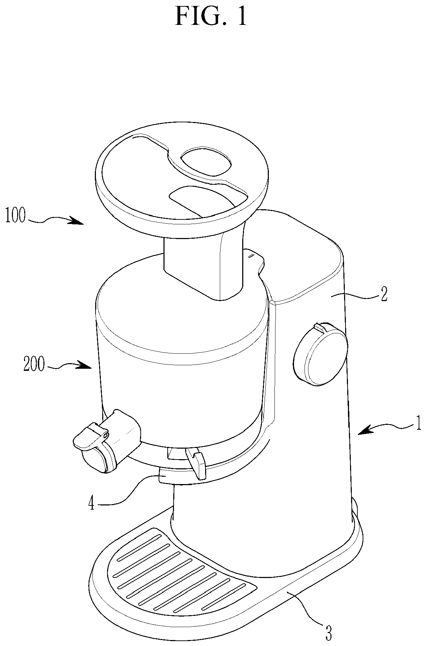

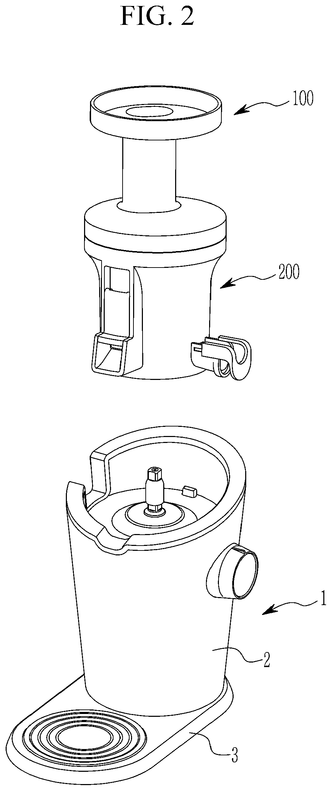

FIGS. 1 and 2 are perspective views of a juicer according to various embodiments of the present disclosure.

FIG. 1 is an embodiment of a laterally driven juicer to which a juicing drum according to the present disclosure may be applied, and a juicer according to the embodiment of the present disclosure may include a main body part 1, a hopper 100, a screw 600, and a drum housing 200.

The main body part 1 may include an upper support part 2, a lower support part 3, and a reducer accommodating part 4. A driving motor that generates driving force and a reducer (not illustrated) that transmits the driving force to a driving shaft (not illustrated) may be disposed inside the main body part 1.

The upper support part 2 may be formed in a shape corresponding to a portion of an outer peripheral surface of the drum housing 200 in order to support a side portion of the drum housing 200.

The lower support part 3 extends from a lower portion of the main body part 1 toward a lower portion of the drum housing 200 and may be formed in a plate shape. A residue cup (not illustrated) that may contain residue may be disposed on the lower support part 3.

The reducer accommodating part 4 extends laterally from a center of the main body part 1 toward the drum housing 200, and the reducer may be disposed therein. The reducer accommodating part 4 may be formed in a shape corresponding to a lower surface of the drum housing 200 so that the drum housing 200 may be seated on its upper portion.

Next, as illustrated in FIG. 2, a lower-driven juicer according to another embodiment of the present disclosure is generally the same as an embodiment of the juicer illustrated in FIG. 1 described above, but differs in that the drum housing 200 is mounted on an upper portion of the main body part 1 and the driving shaft of the driving motor may transmit power to a screw 300 on the same axis.

The main body part 1 may include the upper support part 2 and the lower support part 3. The driving motor that generates the driving force and the reducer (not illustrated) that transmits the driving force to the driving shaft may be disposed inside the main body part 1.

The upper support part 2 may be formed in a shape corresponding to a portion of a lower side surface of the drum housing 200 in order to have the drum housing 200 accommodated at an upper portion thereof and connect the driving shaft to the screw 600. Furthermore, the driving shaft is configured to be connected to a shaft of the screw 600 through a through hole formed in the center of the drum housing 200.

The lower support part 3 extends from the lower portion of the main body part 1 toward a juice outlet and may be formed in a plate shape. A juice cup (not illustrated) that may contain juice may be disposed on the lower support part 3.

As will be described later, the screw of the juicer of the present disclosure illustrated in FIGS. 1 and 2 is composed of the separable screw 600 to which two modules are coupled, and the drum housing 200 replaces the juicing drum. The drum housing 200 has the separable screw 600 accommodated therein, and the driving motor (not illustrated) of the main body part 1 transmits power to the separable screw 600 through the driving shaft (not illustrated). The driving motor includes the reducer (not illustrated), and the reducer reduces a rotation speed (about 2000 rpm) of the driving motor so that the separable screw 600 rotates at a low speed (about 70 rpm). This makes it possible to extract juice without destroying nutrients. Usually, the juicer having this arrangement structure is called a vertical low-speed juicer.

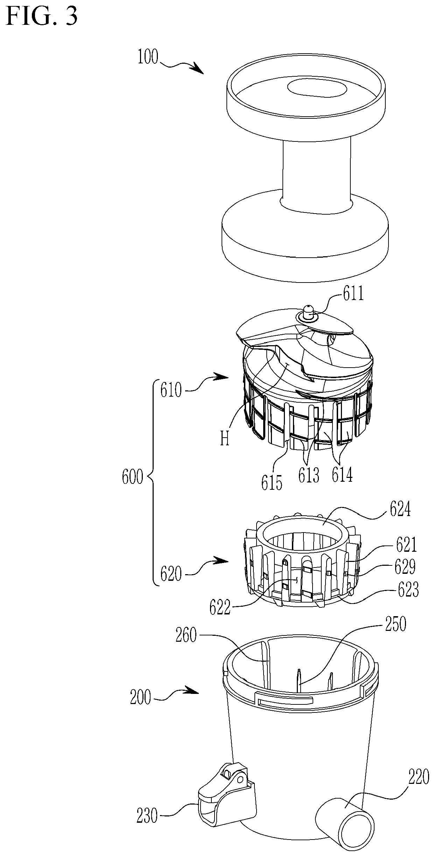

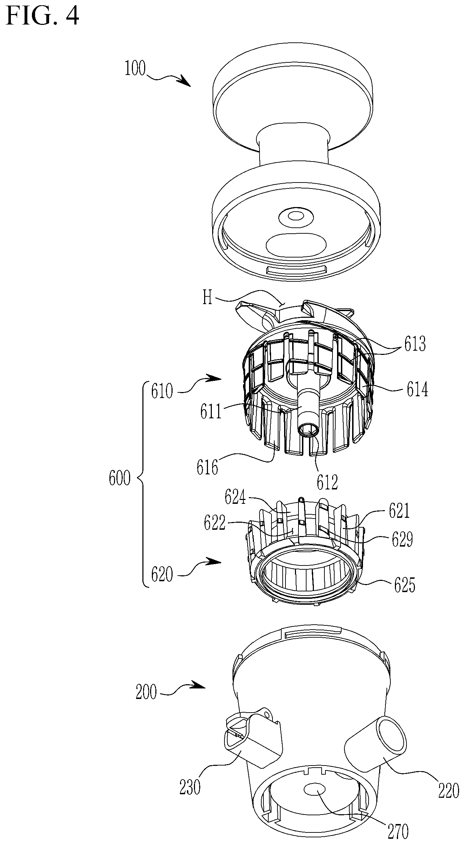

FIGS. 3 and 4 are exploded perspective views of a configuration in which the main body part is excluded from the juicer according to the embodiment illustrated in FIGS. 1 and 2 of the present disclosure. As illustrated in FIGS. 3 and 4, the separable screw 600 is disposed inside the drum housing 200, and the hopper 100 may be detachably coupled to the drum housing 200.

Juicing targets (e.g., vegetables, grains, fruits, etc.) are guided into the drum housing 200 through the hopper 100.

The drum housing 200 is formed in a cylindrical shape with an open top, and the separable screw 600 may be disposed therein.

A juice outlet 220 through which juice may be discharged and a residue outlet 230 through which residue may be discharged are formed in the lower portion of the drum housing 200. The juicing target is separated into residue and juice by the drum housing 200 and the separable screw 600, the residue remains on a radial outside of the separable screw 600, and the juice moves to a radial inside of the separable screw 600. The residue is discharged through the residue outlet 230, and the juice is discharged through the juice outlet 220 through a different path from the path through which the residue is discharged.

A drum hole 270 is formed in a lower center of the drum housing 200. The driving shaft may be inserted into the drum hole 270 to transmit power to the separable screw 600. An inner peripheral surface of the drum hole 270 may have a shape corresponding to the shape of the driving shaft so that the driving shaft may be inserted.

A first rib jaw 250 and a second rib jaw 260 may be formed on an inner peripheral surface of the drum housing 200 while being spaced apart along a circumferential direction. The first rib jaw 250 and the second rib jaw 260 may be formed to be inclined at an acute angle in an upper and lower longitudinal directions or in the longitudinal direction. As the separable screw 600 rotates, the juicing material may be compressed or pulverized by an interaction of spiral protrusions 613 and 629 and the first and second rib jaws 250 and 260. The second rib jaw 260 may additionally perform a function of guiding the juicing target to the lower portion of the drum housing 200. In addition, the second rib jaw 260 may perform a function of adjusting the position of the separable screw 600 and adjusting the juicing space in addition to the function of compressing and pulverizing the juicing material.

The second rib jaw 260 may be formed along the upper and lower longitudinal directions of the drum housing 200, and the first rib jaw 250 may be formed only in a portion of the upper and lower longitudinal directions of the drum housing 200. That is, a length of the second rib jaw 260 may be formed to be longer than the length of the first rib jaw 250.

When these rib jaws 250 and 260 are not present, the juicing target may not go down and stagnate, or compressive force or pulverization force may be low or may not occur at all. That is, the pulverization and compression may not occur. In addition, the rib jaws 250 and 260 may prevent deformation of the drum housing 200 that may be caused by the compressive force generated during the transport, pulverization, and compression of the juicing material by a spiral of the separable screw 600.

In general, the rib jaws 250 and 260 serve to allow the juicing material injected into the drum housing 200 to move down by being stuck in a narrow portion that contacts the screw 600. The rib jaws 250 and 260 may perform the function of pulverizing and squeezing the juicing material together with the screw 600 while moving the juicing material downward. Therefore, the rib jaws 250 and 260 do not necessarily have to be formed perpendicularly in the longitudinal direction of the drum housing 200, and have a shape that intersects the spirals 613 and 629 of the screw 600 and may also be implemented in an inclined form having a constant slope in the longitudinal direction for the efficient transport and compression of the juicing material.

In addition, since the second rib jaw 260 is formed long along the longitudinal direction on the inner peripheral surface of the drum housing 200, the second rib jaw 260 may perform the function of guiding and compressing the juicing material, a reinforcing function to prevent the deformation of the drum housing 200 due to the compressive force generated during the transport and compression of the juicing material by the spiral of the screw 600, and a function of adjusting the accommodation position of the screw 600 within the drum housing 200 and adjusting the juicing space.

In addition, a protruding height of the second rib jaw 260 may be configured to have the same height from the upper portion to the lower portion, and may be gradually lowered from the upper portion to the lower portion, or at least one step difference may be formed in a middle portion in the longitudinal direction of the second rib jaw 260. Based on the step difference, the protruding height of the upper portion of the second rib jaw 260 may be lower than the protruding height of the lower portion of the second rib jaw 260.

The separable screw 600 rotates by receiving torque from the driving shaft and compresses or pulverizes the juicing target.

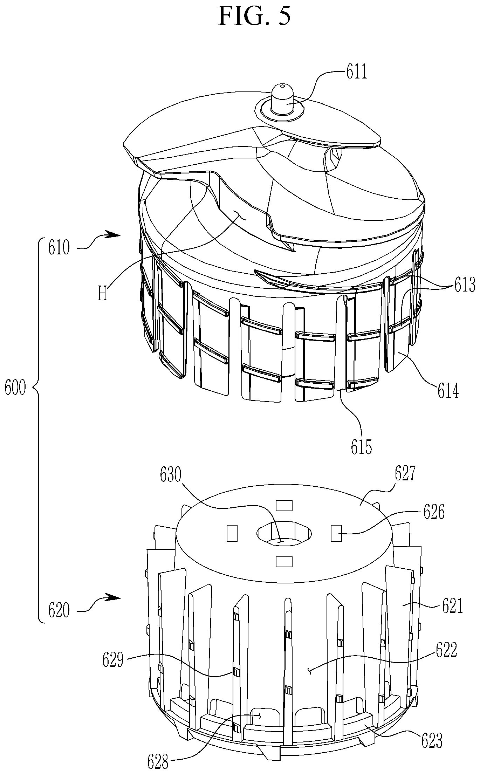

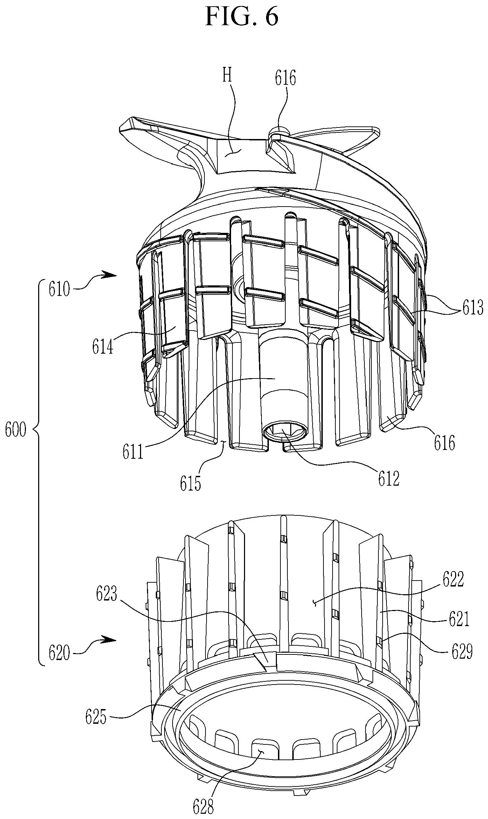

FIGS. 5 and 6 are exploded perspective views of a separable screw according to an embodiment of the present disclosure.

Referring to FIGS. 5 and 6, the separable screw 600 according to an embodiment of the present disclosure includes two approximately cylindrical first modules 610 and second modules 620. The first spiral protrusion 613 (hereinafter referred to as a 'screw spiral' for convenience) is formed diagonally with respect to the longitudinal direction on an outer peripheral surface of the hollow first module 610, and a plurality of slits 615 are formed long in the longitudinal direction. In the present embodiment, a plate member in the first module 610 on which the slit 615 is not formed is referred to as a rod 614. A plurality of ribs 621 are formed on an outer peripheral surface of the cylindrical second module 620 to protrude to the radial outside in a shape corresponding to the slit 615.

A groove H may be formed in the first spiral protrusion 613 located at an upper portion of the second module 620 in a shape that is retreated toward the central axis of the first module 610. The groove H may be retreated from an outer side surface of the first spiral protrusion 613 by approximately 1/2 or more of a radius of the first spiral protrusion 613. In addition, the groove H may be formed at an angle ranging from about 30° to about 90° in the radial direction of the first spiral protrusion 613. The shape of the groove H may prevent an upper side of the first module 610 of the screw from being clogged due to over-injection of the juicing material injected through the hopper 100 and reduce the resulting noise. In addition, since the juicing material may move smoothly to a lower side of the first module 610, the juicing material may be smoothly transported by the screw during the compression and the juicing material may be smoothly injected.

When the groove H is formed in the retreated shape smaller than about 1/2 of the radius of the first spiral protrusion 613 from the outer side surface of the first spiral protrusion 613, the effect of preventing the over-injection of the juicing material is reduced. In addition, when the groove H is formed at an angle range less than about 30° in the radial direction of the first spiral protrusion 613, the effect of preventing the over-injection of the juicing material is reduced, and when the groove H is formed at an angle range greater than about 80°, the phenomenon of clogging the juicing material injected from the upper side of the first module 610 may occur.

Meanwhile, the second spiral protrusion 629 (hereinafter, referred to as a 'screw spiral' for convenience) may be formed on an outer peripheral surface of the rib 621. Depending on the shape of the screw spiral and the position of the rib 621, the second spiral protrusion 629 may not be formed on the outer peripheral surfaces of some of the ribs 621.

The first module 610 is coupled to surround the second module 620. That is, the second module 620 is inserted into the first module 610 and coupled thereto. In this case, the rib 621 of the second module 620 is inserted into the slit 615 of the first module 610, and a predetermined gap is formed between the slit 615 and the rib 621. Juice flows into the separable screw 600 through this gap, and the residue from which the juice is separated is collected in the lower portion between the separable screw 600 and the drum housing 200 and may be discharged to the outside.

In one embodiment of the present disclosure, when the first module 610 and the second module 620 are coupled, the screw spiral formed on an outer peripheral surface of the separable screw 600 is formed continuously. In another embodiment, some sections may be slightly broken, but a generally continuous screw spiral is formed. To this end, a diameter of the rod 614 and a diameter of the rib 621 may be the same, and the protrusion heights of the screw spiral protrusions 613 and 629 may also be the same. With this configuration, when the first module 610 and the second module 620 are coupled, the first spiral protrusion 613 and the second spiral protrusion 629 have a generally naturally continuous shape.

Meanwhile, a width of the rod 614 may generally have a shape that becomes narrower toward the radial inside. That is, the inclined part is formed on a side surface of the rod 614. In this case, the gap formed between the slit 615 of the first module 610 of the separable screw 600 and the rib 621 of the second module 620 is configured to become wider toward the radial inside, thereby preventing the problems, such as clogging the gap due to residue or interrupting the flow of juice, during the juicing. In an embodiment, in order to make the width of the rod 614 narrower toward the radial center, the cross section of the rod 614 of the first module 610 may be configured to have a generally semicircular, oval, or trapezoidal shape. Alternatively, for example, the above effect may be obtained by forming a thickness of the rib 621 to be finely narrower toward the radial inside.

Meanwhile, the second module 620 of the separable screw 600 has a plurality of screw grooves 622 formed between the plurality of ribs 621. In an embodiment, the screw groove 622 may have a shape in which the inner peripheral surface is entirely clogged. In another aspect, the screw groove 622 may have a shape in which a portion of the inner peripheral surface, particularly a lower inner peripheral surface of the screw groove 622 is open. In addition, the clearance may be formed between the inner peripheral surface of the screw groove 622 and an inner peripheral surface of the rod 614. Through this clearance, the juice may move to a lower portion between the first module 610 and the second module 620. A juice discharge hole 628 may also be formed on the lower side of the screw groove 622. The juice collected in the lower portion between the first module 610 and the second module 620 may flow into the separable screw 600 through the juice discharge hole 628. Meanwhile, the lower inner peripheral surface of the screw groove 622 may be open so that the open inner peripheral surface may serve as the juice discharge hole 628.

A shaft through hole 630 into which the screw shaft 611 is inserted may be formed in an upper surface 627 of the second module 620. In order to fix the coupled position of the first module 610 and the second module 620 and prevent the relative rotation of the first module 610 and the second module 620, the shaft through hole 630 may be a polygonal hole. In this specification, for example, the first module 610 and the second module 620 may be fixed at four different positions by the screw shaft 611, which is a square-shaped shaft, and the shaft through-hole 630, which is a square-shaped hole.

A seating groove 625 may be formed on the lower side of the second module 620 so that the separable screw 600 may be seated in the drum housing 200. A seating protrusion (not illustrated) corresponding to the seating groove 625 may be formed to protrude upward on the lower surface of the drum housing 200. By coupling the seating groove 625 to surround the seating protrusion, it is possible to prevent residue separated during the juicing from flowing into the screw 600.

As described before, a clearance may be formed between the inner peripheral surface of the screw groove 622 and the inner peripheral surface of the rod 614 (i.e., between an inner peripheral surface of the first module 610 and the outer peripheral surface of the second module 620). This gap may become wider toward the lower side of the separable screw 600. Due to this clearance, it is possible to secure a space where juice may flow between the first module 610 and the second module 620 through the gap.

In addition, a first step 616 may be formed at the lower end of the rod 614 and a second step 623 may be formed at the lower side of the rib 621 correspondingly. The second step 623 of the second module 620 and the first step 616 of the inner module 10 are coupled to withstand the pressure transmitted to the screw 600 and prevent residue from entering the inside of the screw 600.

Meanwhile, a magnet accommodating part 626 may be formed on the upper surface 627 of the second module 620. When the second module 620 is coupled to the first module 610, a magnet may be disposed in the magnet accommodating part 626 and a magnet or a magnetic material of opposite polarity may be disposed inside the first module 610 so that the second module 620 and the first module 610 are not easily separated, thereby fixedly coupling the second module 620 to the first module 610.

As described above, by configuring the separable screw so that two modules may be coupled, the two modules are easily assembled and disassembled, making it easy to manufacture and clean the drum housing.

In addition, according to an embodiment of the present disclosure, it is possible to smoothly pulverize, transfer, and compress the juicing material by the screw during the compression, increase the juicing rate through the fine pulverization and compression of the juicing material, and smooth the injection of the juicing material.

In addition, according to an embodiment of the present disclosure, by preventing residue from being stuck through the first rib jaw and the inclined part during the juicing, it is possible to prevent the problem of residue that interrupts a flow of extracted juice, thereby improving the juicing efficiency.

In addition, by forming the groove on the uppermost spiral protrusion of the screw, it is possible to prevent noise occurring during the juicing and the clogging of the pulverized juicing material can be prevented, thereby making the juicing smoother. In addition, there is an advantage in that the material is cut by the groove, so it is possible to smooth the transport of the material.

While this disclosure has been described in connection with what is presently considered to be practical exemplary embodiments, it is to be understood that the disclosure is not limited to the disclosed embodiments. On the contrary, it is intended to cover various modifications and equivalent arrangements included within the spirit and scope of the appended claims.

### [Industrial Applicability]

According to an embodiment of the present disclosure, by configuring the separable screw so that two modules may be coupled, two modules are easily assembled and disassembled, making it easy to manufacture and clean a juicing drum.

In addition, according to an embodiment of the present disclosure, it is possible to smoothly pulverize, transfer, and compress a juicing material by a screw during compression, increase a juicing rate through fine pulverization and compression of the juicing material, and smooth an injection of the juicing material.

In addition, according to an embodiment of the present disclosure, by preventing residue from being stuck through a first rib jaw and an inclined part during juicing, it is possible to prevent the problem of residue that interrupts a flow of squeezed juice, thereby improving the juicing efficiency.

In addition, by forming a groove on an uppermost spiral protrusion of a screw, it is possible to help cut and pulverize the juicing material, facilitate downward transport, prevent noise during juicing, and prevent clogging of the pulverized juicing material to smooth the juicing.

## Claims

1. A separable screw, comprising:
a first module having a plurality of slits formed on an outer peripheral surface thereof by a plurality of rods; and
a second module formed with a plurality of ribs inserted into the slits of the first module,
wherein the first module and the second module are detachably coupled, and when the second module is inserted into and coupled to the first module, the rib is inserted into the slit to form a gap between the rib and the slit,
at least one first spiral protrusion is formed on an outer peripheral surface of the rod, and
a groove retreated toward a central axis of the first module is formed on the first spiral protrusion located at an upper portion of the first module.

2. The separable screw of claim 1, wherein:
the groove is retreated from an outer side surface of the first spiral protrusion by more than 1/2 of a radius of the first spiral protrusion.

3. The separable screw of claim 1, wherein:
the groove is formed in an angle range of 30° to 90° in a radial direction of the first spiral protrusion.

4. The separable screw of claim 1, wherein:
at least one second spiral protrusion is formed in at least one of the plurality of ribs, and
when the second module is inserted into and coupled to the first module, the first spiral protrusion of the rod and the second spiral protrusion of the rib form a continuous screw spiral.

5. The separable screw of claim 1, wherein:
a lower portion of the second module is open and an upper portion thereof is closed.

6. The separable screw of claim 5, wherein:
a screw shaft is formed in an inner center of the first module, and
a shaft through hole of a shape corresponding to the screw shaft is formed on an upper surface of the second module so that the screw shaft is inserted.

7. The separable screw of claim 6, wherein:
the screw shaft is formed in a polygonal shape.

8. The separable screw of claim 5, wherein:
a key protrusion is formed on an inner upper surface of the first module, and
a key groove into which the key protrusion is inserted is formed on an outer upper surface of the second module.

9. The separable screw of claim 1, wherein:
a width of the rod is narrower toward a radial inside of the first module.

10. The separable screw of claim 1, wherein:
a clearance is formed between an inner peripheral surface of the first module and an outer peripheral surface of the second module.

11. The separable screw of claim 1, wherein:
an inclined part is formed on the rod of the first module by cutting off an edge adjacent to the slit.

12. A juicer, comprising:
the separable screw of any one of claims 1 to 11;
a drum housing having the separable screw accommodated therein, at least one rib jaw formed on an inner peripheral surface thereof in a longitudinal direction, a drum hole formed on a bottom surface thereof, and a juice outlet through which juice is discharged and a residue outlet through which residue is discharged and spaced apart from each other; and
a main body part including a driving shaft that is inserted into the drum hole and transmits power to the separable screw.

13. The juicer of claim 12, wherein:
the juice extracted between the separable screw and the drum housing moves to an inside of the separable screw through the gap formed between the rib and the slit and is discharged through the juice outlet.

14. The juicer of claim 12, wherein:
the residue remaining after the juice is extracted between the separable screw and the drum housing moves downward between the separable screw and the drum housing and is discharged through the residue outlet.
